# EUROPEAN PATENT SPECIFICATION

(11) **EP 1 475 489 B1**
(45) Date of publication and mention of the grant of the patent: **20.09.2006**
(21) Application number: 03425295.7
(22) Date of filing: 08.05.2003
(51) Int. Cl.: E04C 2/32, E04B 1/84

(54) **Insulating structure**
Isolierendes Bauelement
Structure isolante

(43) Date of publication of application: 10.11.2004
(73) Proprietor: Sochima S.p.A., 10121 Torino (IT)
(72) Inventor: Peditto, Andrea, 10141 Torino (IT)
(74) Representative: Gerbino, Angelo

(56) References cited:
- DE-A- 4 327 503
- FR-A- 761 360
- FR-A- 1 357 512
- FR-A- 1 409 817
- US-A- 5 765 329

## Description

The present invention relates to an insulating structure for uses both in the building sector and in the vehicle sector.

There are known insulating structures produced with synthetic polymeric materials which, however, have inadequate fire-proofing properties.

Other known insulating structures produced using fibre, in particular glass fibre, materials tend to give off a fine dust which is extremely noxious to those present in the surrounding environment.

Therefore, an object of the present invention is to provide an insulating structure which is free from the disadvantages mentioned above with reference to the above prior art.

More specifically, the present invention relates to an insulating structure having the features disclosed in the preamble of claim 1 which follows.

A known structure of this kind is disclosed in the prior art document FR-A-1 409 817.

The further prior art document FR-A-761 360 discloses a wavy armature formed by superimposed layers having apertures for the insertion of tabs protruding from adjacent layers.

Another object of the present invention is to provide an insulating structure having improved sound dampening properties.

The above-captioned objects are achieved by a structure having the features disclosed in claim 1 which follows. Preferred features of the present invention are disclosed in the dependent claims.

The aluminium used in the insulating structure of the invention is provided with optimum fire-proofing properties and does not release into the surrounding environment powders or fine dust which are detrimental to health. The low density thereof is further distinctly advantageous in vehicular applications where weight reduction is highly desirable

In the structure of the present invention, at least one corrugated sheet metal layer, and preferably all of the layers, has/have openings. The presence of those openings is particularly advantageous from the point of view of noise reduction.

Other advantages and characteristics of the present invention will become clear from the following detailed description which is given by way of non-limiting example with reference to the appended drawings, in which:
Figure 1 is a perspective view of an insulating structure not according to the invention,
Figure 2 is a plan view of the structure in Figure 1,
Figure 3 is a side elevation of the structure in the preceding Figures,
Figure 4 is a front elevation of the structure in the preceding Figures and
Figures 5 to 8 are views which correspond to Figures 1 to 4, respectively, of an insulating structure according to the invention.

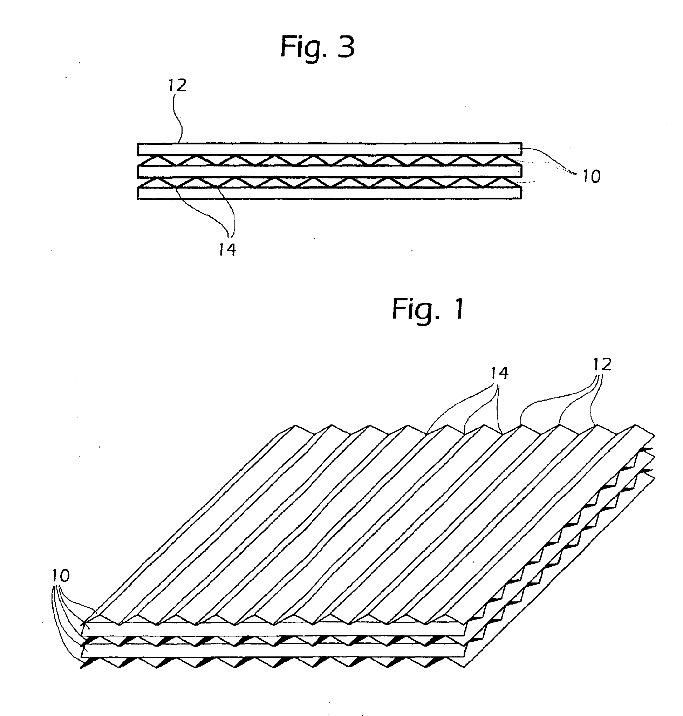

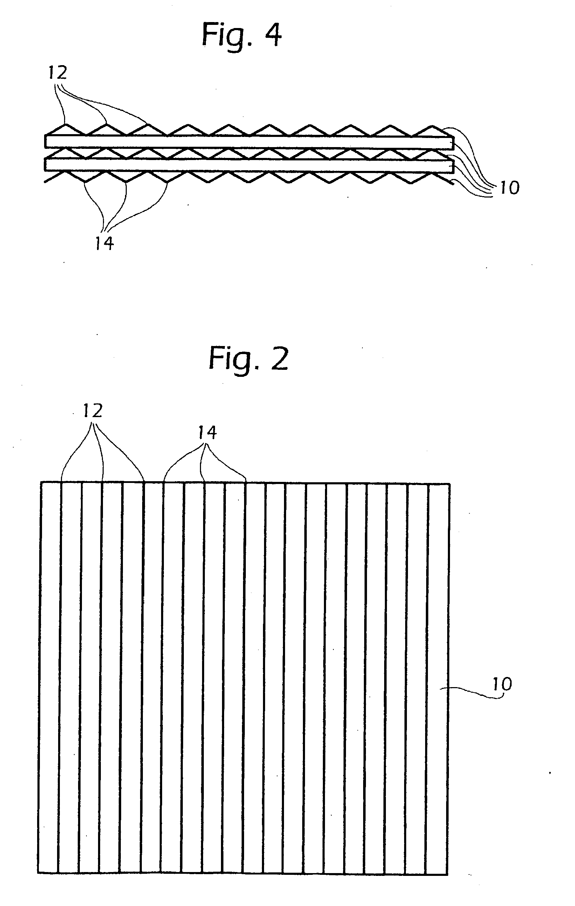

An insulating structure comprises (Figures 1 - 4) a plurality of superimposed corrugated sheet metal layers 10. Each layer 10 is produced from aluminium and has a series of rectilinear ridges 12 and depressions 14 which are parallel with each other. These ridges 12 and depressions 14 are, for the sake of simplicity, represented in the Figures as sharp corners, but could naturally also be rounded or smoothed. The orientation of ridges 12 and depressions 14 of a layer 10 is arranged at an angle of approximately 90° relative to the orientation of ridges 12 and depressions 14 of the immediately adjacent layer(s) 10.

The layers 10 are fixed together by means of any conventional joining technique, for example, by means of adhesive bonding or welding.

The above-described insulating structure can be arranged in any wall, ceiling or floor space in both the building and vehicular sectors. The dimensions of the structure can be freely selected, in principle. In practice, they are preferably standardised and such that they conform to the usual dimensions of the spaces in which those structures have to be positioned when in use. A non-limiting example of an application is for the insulation of railway vehicles.

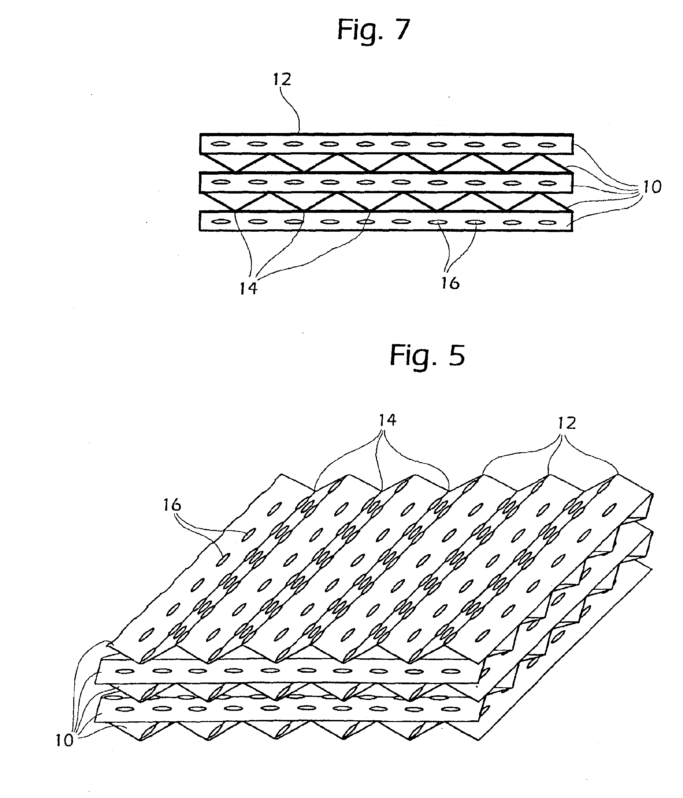

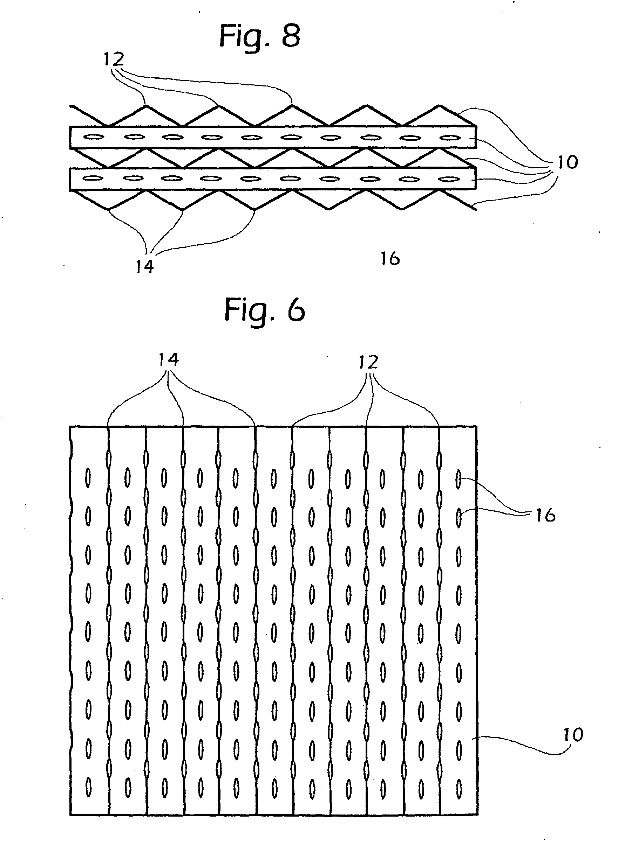

Figures 5 to 8 illustrate an alternative embodiment of the invention, in which parts identical or equivalent to those in the structure illustrated in Figures 1 to 4 are denoted by the same reference numerals.

In this case, all of the corrugated sheet metal layers 10 have openings 16 which are arranged along a plurality of lines which are orientated parallel with the orientation of ridges 12 and depressions 14 of the relevant layer 10. The openings 16 are of ellipsoidal form with the longer axis orientated parallel with the orientation of ridges 12 and depressions 14 of the relevant layer 10. In particular, respective lines of openings 16 are arranged along the top of each ridge 12, the bottom of each depression 14 and approximately half-way between each ridge 12 and each adjacent depression 14.

The openings 16 make the structure particularly effective with regard to noise reduction.

In embodiments of the invention which are not illustrated, those openings could be arranged in a different pattern or with an irregular arrangement and/or could be of any shape, for example, circular, polygonal, etc.

Naturally, the principle of the invention remaining the same, the forms of embodiment and details of construction may be varied widely with respect to those described purely by way of example, without thereby departing from the scope of the invention as defined by the appended claims.

## Claims

1. An insulating structure comprising a plurality of corrugated sheet metal layers (10) which are superimposed on and fixed firmly to each other, each corrugated sheet metal layer (10) having a series of ridges (12) and depressions (14) which are parallel with each other, the orientation of ridges (12) and depressions (14) of a layer (10) being arranged at an angle relative to the orientation of ridges (12) and depressions (14) of the immediately adjacent layer(s) (10), whereby at least one corrugated sheet metal layer (10) has openings (16), which are arranged along a plurality of lines which are orientated parallel with the orientation of ridges (12) and depressions (14) of the relevant layer (10), **characterized in that** each corrugated sheet metal layer is produced from aluminium and that the ridger and depressions are rectilinear.

2. An insulating structure according to claim 1, wherein the orientation of ridges (12) and depressions (14) of a layer (10) is arranged at an angle of approximately 90° relative to the orientation of ridges (12) and depressions (14) of the immediately adjacent layer(s) (10).

3. An insulating structure according to either of the preceding claims, wherein the corrugated sheet metal layers (10) are fixed firmly to each other by means of adhesive bonding.

4. An insulating structure according to claim 1, wherein all of the corrugated sheet metal layers (10) have openings (16).

5. An insulating structure according to claim 1, wherein the lines of openings (16) are arranged along the top of each ridge (12), the bottom of each depression (14) and/or approximately half-way between each ridge (12) and each adjacent depression (14).

6. An insulating structure according to any one of the preceding claims, wherein the openings (16) are of ellipsoidal form with the longer axis orientated parallel with the orientation of ridges (12) and depressions (14) of the relevant layer (10).

## Patentansprüche

1. Isolieraufbau mit einer Vielzahl von gewellten Metallblech-Schichten (10), die übereinander liegen und fest miteinander verbunden sind, wobei jede gewellte Metallblech-Schicht (10) eine Reihe von Erhebungen (12) und Vertiefungen (14) besitzt, die parallel zueinander angeordnet sind, wobei die Ausrichtung der Erhebungen (12) und der Vertiefungen (14) von einer Schicht (10) relativ zur Ausrichtung der Erhebungen (12) und der Vertiefungen (14) der unmittelbar benachbarten Schicht(en) (10) unter einem Winkel angeordnet ist, wobei zumindest eine gewellte Metallblech-Schicht (10) mit Öffnungen (16) versehen ist, die entlang einer Vielzahl von Linien angeordnet sind, die parallel zur Ausrichtung der Erhebungen (12) und der Vertiefungen (14) der betreffenden Schicht (10) ausgerichtet sind, **dadurch gekennzeichnet, dass** jede gewellte Metallblech-Schicht aus Aluminium hergestellt wird, und dass die Erhebungen und Vertiefungen geradlinig verlaufen.

2. Isolieraufbau gemäß Anspruch 1, wobei die Ausrichtung der Erhebungen (12) und der Vertiefungen (14) einer Schicht (10) relativ zur Ausrichtung der Erhebungen (12) und der Vertiefungen (14) der unmittelbar benachbarten Schicht(en) (10) unter einem Winkel von etwa 90° angeordnet ist.

3. Isolieraufbau gemäß einer der bisherigen Ansprüchen, wobei die gewellten Metallblech-Schichten (10) über eine Verklebung fest miteinander verbunden sind.

4. Isolieraufbau gemäß Anspruch 1, wobei alle gewellten Metallblech-Schichten (10) mit Öffnungen (16) versehen sind.

5. Isolieraufbau gemäß Anspruch 1, wobei die Linien der Öffnungen (16) am obersten Teil einer jeden Erhebung (12), am Boden einer jeden Vertiefung (14) und/oder etwa auf halbem Weg zwischen einer jeden Erhebung (12) und einer jeden benachbarten Vertiefung (14) angeordnet sind.

6. Isolieraufbau gemäß irgendeinem der bisherigen Ansprüche, wobei die Öffnungen (16) ellipsenförmig ausgebildet sind, wobei die längere Achse parallel zur Ausrichtung der Erhebungen (12) und der Vertiefungen (14) der betreffenden Schicht (10) ausgerichtet ist.

## Revendications

1. Structure isolante comprenant une pluralité de couches de tôle métallique ondulée (10) qui sont superposées et solidement fixées les unes aux autres, chaque couche de tôle métallique ondulée (10) comportant une série de crêtes (12) et de creux (14) qui sont parallèles les uns aux autres, l'orientation des crêtes (12) et des creux (14) d'une couche (10) étant à un angle par rapport à l'orientation des crêtes (12) et des creux (14) de la/des couche(s) immédiatement adjacente(s) (10), de manière qu'au moins une couche de tôle métallique ondulée (10) comporte des ouvertures (16), qui sont agencées le long d'une pluralité de lignes qui sont orientées parallèlement à l'orientation des crêtes (12) et des creux (14) de la couche (10) en question, **caractérisée en ce que** chaque couche de tôle métallique ondulée est produite à partir d'aluminium, et **en ce que** les crêtes et les creux sont rectilignes.

2. Structure isolante selon la revendication 1, dans laquelle l'orientation des crêtes (12) et des creux (14) d'une couche (10) est à un angle d'environ 90° par rapport à l'orientation des crêtes (12) et des creux (14) de la/des couche(s) immédiatement adjacente(s) (10).

3. Structure isolante selon l'une ou l'autre des revendications précédentes, dans laquelle les couches de tôle métallique ondulée (10) sont solidement fixées les unes aux autres au moyen d'une liaison adhésive.

4. Structure isolante selon la revendication 1, dans laquelle toutes les couches de tôle métallique ondulée (10) comportent des ouvertures (16).

5. Structure isolante selon la revendication 1, dans laquelle les lignes des ouvertures (16) sont agencées le long du sommet de chaque crête (12), le long du fond de chaque creux (14) et/ou à peu près à mi-chemin entre chaque crête (12) et chaque creux (14) adjacent.

6. Structure isolante selon l'une quelconque des revendications précédentes, dans laquelle les ouvertures (16) ont une forme ellipsoïdale avec l'axe plus long orienté parallèlement à l'orientation des crêtes (12) et des creux (14) de la couche (10) en question.
